# EUROPEAN PATENT SPECIFICATION

(11) **EP 2 292 972 B1**
(45) Date of publication and mention of the grant of the patent: **27.03.2013**
(21) Application number: 09169301.0
(22) Date of filing: 02.09.2009
(51) Int. Cl.: F21S 8/10, F21V 9/08, G02B 6/00, B60Q 1/30, B60Q 1/44, F21Y 101/02, F21W 101/14, F21W 101/12, F21W 101/00

(54) **Light device and vehicle including light device**
Lichtvorrichtung und Fahrzeug mit Beleuchtungsvorrichtung
Dispositif d'éclairage et véhicule utilisant ledit dispositif

(43) Date of publication of application: 09.03.2011
(73) Proprietor: 3M Innovative Properties Company, Saint Paul, MN 55133-3427 (US)
(72) Inventor: Eberwein, Arnold, D-41453, Neuss (DE)
(74) Representative: Bergen, Katja

(56) References cited:
- WO-A2-2007/092152
- WO-A2-2008/122920
- US-A- 4 005 538
- US-A1- 2009 185 372

## Description

### Field of the invention

The present invention relates to a light device for a vehicle. In particular aspect, the present invention relates to a light device for use with a vehicle, for example for to provide a functional light on the vehicle such as a back light, blinker, back-up light or stop light. The invention further relates to a vehicle with a light device.

### Background

Commonly light devices for vehicles and in particular motor vehicles such as cars, cycles, busses, trucks, trailers and for rail cars, typically are illuminated by light sources directly illuminating a colored transparent cover, e. g. made of glass or plastic, to provide for lights required in a functional light device, i.e. back light, blinker, back-up light or stop light. The light devices typically have light bulbs arranged in a housing with a reflector behind the bulbs and colored transparent covers in front of the bulbs in order to facilitate emission of differently colored lights.

The light bulbs typically have a high power consumption and furthermore, the construction of such light devices is rather thick and bulky. This bulky construction of the light device requires designing of the body of a vehicle such that the light device can be accommodated therein. Generally, the light device should not protrude too much beyond the car body. Accordingly, recessed areas are needed to accommodate the light device in the body. These recessed areas for the light device lead to loss of space in the interior of the car, e. g. the trunk. Furthermore, the needed size of the light device, also means added weight of the car.

Typically, light devices for vehicles comprise one or more colored stripes, which emit light of different colors as required for the specific function of the light device. For example, if a back light or stop light is required, the color of the stripe would be red, possibly in a different intensity for each function. For a blinker, typically the color of the stripe is yellow, white or clear transparent. For a back-up light, the stripe is either clear transparent or of white color.

US 2009/122566, US 5519588 and US 3766373 disclose conventional light devices having a reflector of a parabolic shape, wherein a light source, e. g. a light bulb or a light emitting diode is arranged. In front of the light source is a colored cover made of glass or plastic. Alternatively, a colorless cover is provided and the light source is colored.

US 2008/00191117 A1 discloses a low-profile backlight for a keypad comprising a flexible light guide, a light source disposed adjacent to a transmission interface of the flexible light guide and a housing to at least partially enclose the flexible light guide and the light source. The transmission interface illuminates the flexible light guide. A surface area of the flexible light guide is visible through the housing.

WO 2007/092152 discloses a generic light device.

### Summary of the invention

It would now be desirable to provide a further light device, in particular one for use as a functional light on a vehicle. It would for example be desirable to provide a light device that is low in power consumption. It may also be desirable to provide a light device that is of reduced weight and is less bulky such that it can be more conveniently accommodated into a vehicle body. Furthermore, it would be desirable to have a light device which can be manufactured in an easy way and/or can be manufactured at low cost.
Still further, it would be desirable to develop a light device that offers more design flexibility and in particular that offers further design options. More particularly, it would be desirable to develop a light device of low thickness while maintaining the light emission required by approval authorities for use of such light devices on vehicles.

In one aspect, the present invention provides a light device, in particular for use on a vehicle, said light device comprising a housing having a front side through which light can be emitted and an opposite back side, arranged in the housing: (i) at least one light guide having opposite first and second major side and one or more sides there between, said first major side facing towards said front side of said housing and said second major side facing towards the back side of said housing; (ii) at least one light source arranged along at least a portion of at least one side face of the light guide for coupling light into said light guide; (iii) a first non-woven fibrous layer arranged between the second major side of said light guide and said back side of the housing; and (iv) a second non-woven fibrous layer arranged on the first major side of said light guide and said second non-woven fibrous layer being translucent; at least one transparent retro-reflective sheet having on a major side a plurality of cube-corner elements, said retro-reflective sheet being arranged at the front side of said housing.

In yet another aspect, the present invention provides a vehicle, in particular a motor vehicle such as a car, a cycle, a bus, a truck, a trailer or a rail car comprising a light device as defined above.

In a particular embodiment, a light device is provided comprising at least one colored area such as for example a stripe, to define a functional light such as a back light, a blinker, a back-up light or a stop light. For example, the light device may comprise several colored areas such as for example stripes, whereby each area or stripe defines a different functional light. Functional lights may include for example those selected from a back light, a blinker, a back-up light and a stop light.

The light device as described herein typically allows for easy and convenient manufacturing and reasonable or low manufacturing costs. Furthermore, the light device can have a rather slim design but nevertheless still has excellent luminance. Moreover, suitable and desired luminance can be achieved without the need to increase the number of light sources to illuminate the light guide and/or without the need to increase the power consumption. In particular, the light device is suitable to achieve light output as is or may be required by the respective authorities. Still further, the light device typically offers further design options and may provide additional design flexibility. For example, the light device can be bent to follow curved contours and hence, light devices constructed therewith can more readily follow curved contours of a car or other motor vehicle, thus enhancing the appeal of vehicles including the light devices.
Furthermore, the light device typically has low power consumption and provides for even distribution of light. Typically, the light devices have a lower weight than light devices commonly used on vehicles today, in particular in motor vehicles.

The following is a summary of embodiments according to the invention:
1. Light device comprising:
   a. a housing having a front side through which light can be emitted and an opposite back side,
   b. arranged in the housing:
      i. at least one light guide having opposite first and second major side and one or more sides there between, said first major side facing towards said front side of said housing and said second major side facing towards the back side of said housing;
      ii. at least one light source arranged along at least a portion of at least one side face of the light guide for coupling light into said light guide;
      iii. a first non-woven fibrous layer arranged between the second major side of said light guide and said back side of the housing; and
      iv. a second non-woven fibrous layer arranged on the first major side of said light guide and said second non-woven fibrous layer being translucent;
   c. at least one transparent retro-reflective sheet having on a major side a plurality of cube-corner elements, said retro-reflective sheet being arranged on the front side of said housing.
2. Light device according to embodiment 1, further comprising a transparent cover.
3. Light device according to any of embodiments 1 or 2, wherein the at least one light guide is a solid light guide.
4. Light device according to any of embodiments 1 or 3, wherein the at least one light guide comprises means for providing extraction of light at the first major side of said light guide.
5. Light device according to any of embodiments 1 to 4, wherein the at least one light guide is made of transparent polymeric material having dispersed therein light scattering particles.
6. Light device according to any of embodiments 1 to 5, wherein the thickness of the at least one light guide is not more than 3 mm.
7. Light device according to any of embodiments 1 to 6, wherein the at least one light source is a light-emitting diode.
8. Light device according to any of embodiments 1 to 7, wherein said first and second non-woven fibrous layers are in contact with a surface of the at least one light guide and are contiguous thereto.
9. Light device according to any of embodiments 1 to 8, wherein said non-woven fibrous layers are compressed in said housing to a thickness of between 0.2 and 5 mm.
10. Light device according to any of embodiments 1 to 9, wherein the base weight of the non-woven fibrous layers is between 20 and 500 g/m².
11. Light device according to any of embodiments 1 to 10, wherein the non-woven fibrous layers comprises fibers selected from the group consisting of polymeric fibers, glass fibers, ceramic fibers, metal fibers and combinations thereof.
12. Light device according to any of embodiments 1 to 11, wherein the thickness of the housing is not more than 10 mm.
13. Light device according to any of embodiments 1 to 12, further comprising a light enhancement film arranged on the back side of said housing and having a diffuse reflective surface facing the first non-woven fibrous layer.
14. Light device according to any of embodiments 1 to 13, comprising at least one colored stripe to define a functional light on a vehicle.
15. Light device according to any of embodiments 1 to 13, comprising two or more colored areas of different color arranged alongside each other wherein each area defines a different functional light selected from a back light, a blinker, a back-up light and a stop light
16. Light device according to embodiment 15, further comprising at least two or more light guides each associated with a colored area, at least one separator having first and second major sides and transverse sides there between, said at least one separator is arranged within the housing between two light guides such that said first and second major sides of said separator extend substantially perpendicular to the front and back sides of said housing, said at least one separator comprises a reflective surface on said first and second major sides.
17. Light device according to any of embodiment 1 to 16, wherein the at least one transparent retro-reflective sheet is colored.
18. Light device according to any of embodiments 1 to 16, wherein the at least one light source provides for colored light.
19. Light device according to embodiment 2, wherein the transparent cover is colored.
20. Light device according to any of embodiments 1 to 19 comprising cut-out areas in the at least one retro-reflective sheet and in the least one light guide to provide non-retro-reflective areas behind which is arranged a light source.
21. Vehicle comprising a light device according to any of embodiments 1 to 20.
22. Vehicle according to embodiment 21 wherein the light device is arranged at the exterior body of the vehicle.
23. Vehicle according to embodiment 21 or 22 arranged at the rear of the vehicle such as for example at or near the middle to provide for example a third stop light.
24. Vehicle according to embodiment 21 or 22 comprising two light devices, said light devices arranged at the rear of the vehicle near the left and right edges and wherein said light devices are as defined in any of embodiments 1 to 20.
25. Vehicle according to embodiment 24 wherein the light devices extend beyond the edges of the vehicle, so that they also at least partially extend to the sides of the vehicle.
26. Vehicle according to embodiment 21, wherein the vehicle is a motor vehicle.

### Detailed description of the invention

Typically, the light guide, light source and non-woven fibrous layers of the light device are arranged in a housing. Optionally, a reflective layer may be arranged at the back side of the housing. Further, a retro-reflective sheet may be arranged in the housing at its front side. The housing typically comprises a front side and a back side. In one embodiment, the front side and the back side of the housing may be attached to each other at a sealed edge, for example by means of adhesive, thermobonding, mechanical interlocking or any other suitable method.

Typically, the housing has a front side with generally a transparent or translucent cover thereon and an opposite back side. Typically, the cover when present will be a transparent or translucent polymer such as for example polymethyl methacrylate, polycarbonate or polyester. It is also conceivable that the front side is translucent white. However, the use of glass as a cover is not excluded. The cover may generally be arranged at the front side over the second non-woven fibrous layer and typically will press the non-woven fibrous layer onto the light guide. Furthermore, the use of a non-woven fibrous layer on the first and/or the second major sides of the light guide may provide for cushioning or vibration dampening such that the light source, for example LEDs are protected against vibration shock. At the same time, at least the second non-woven fibrous layer at the first major side may increase the luminance.

The back side of the housing may be opaque, transparent or translucent. Typically, an opaque back side will be used, for example made of black polycarbonate, although white color is also conceivable. Also, the inner surface of the back side of the housing facing the first non-woven fibrous layer may in one embodiment be reflective so as to provide for an optional reflective layer facing the first non-woven fibrous layer. In such an embodiment, it will typically be desirable that the first non-woven fibrous layer is translucent. For example, such reflectivity on the inner surface of the back side may be provided through a reflective coating on the back side of the housing, for example a white paint or a mirror reflective coating such as a metallic coating. In an alternative embodiment, a reflective layer facing the first non-woven fibrous layer may be provided through a separate reflective layer between the back side of the housing and the first non-woven fibrous layer. In one embodiment, such a separate reflective layer may be a diffuser film.

In one embodiment, a reflective layer may be arranged at the back side of the housing. The reflective layer may be a specularly reflecting layer or preferably can be a diffuse reflective layer. In one embodiment, the reflective layer may be provided on the back side of the housing and facing the first non-woven layer. The reflective layer may be provided as a coating on the backside or as a separate film that may or may not be adhered to the backside of the housing. A particular suitable reflective layer includes a diffuser film commercially available from 3M under the designation "Light Management Film 3635-20" having a thickness of 0.15 mm. Also, a reflective layer of the type "Light Enhancement Film 3635-20" available from 3M is conceivable.

In one embodiment, the design of the housing is such that a desired flexibility is obtained. Thus, in one embodiment the housing may be a plastic pouch which may have a transparent or translucent cover at the front side where it is arranged over the second non-woven fibrous layer. At the opposite side thereof, the back side may be transparent, translucent or opaque.

In an alternative embodiment, the housing may be of a hard plastic, nevertheless, it would still be desired that such housing still has enough flexibility for example to follow a somewhat curved surface. Such might be accomplished by providing an elastomeric link between the back side and the front side at least along two opposite sides of the housing. Alternatively, back and front sides might be connected with an elastomeric along the full circumference of the housing. Generally it will also be desired in these alternative embodiments that the back side and the transparent or translucent cover at the front side not be too thick so as to allow for enough flexibility of the light device.

In an embodiment, the light device comprises a first non-woven fibrous layer arranged between the second major side of the light guide and the back side of the housing. Furthermore, a second non-woven fibrous layer is arranged on the first major side of the light guide. At least the second non-woven layer is translucent, but in a particular embodiment, both first and second non-woven layers are translucent.

Typically, the fibers for use in the fibrous layers are selected to be refractive and/or reflective and scattering . Suitable fibers for use in the light device include polymeric fibers such as polyolefin based fibers or polyester based fibers, glass fibers, ceramic fibers and metal fibers. Of course, it is also possible to use a blend of different fibers such a for example a blend of polymeric fibers and glass or ceramic fibers or a blend of polymeric fibers and metal fibers.

The second non-woven fibrous layer and in a particular embodiment also the first non-woven fibrous layer, is translucent. A suitable translucent non-woven fibrous layer includes a layer of Thinsulate™ non-woven material, commercially available from 3M Company. A translucent non-woven fibrous layer typically allows at least 20%, for example at least 50% of light to be passed through the fibrous layer. Generally, a translucent non-woven fibrous layer will have a base weight of 20 g/m² to 500 g/m², for example between 50 g/m² and 250 g/_{M}². A suitable non-woven fibrous layer may comprise Thinsulate™ of the type P-60, having a basis weight of 60 g/m² and an uncompressed thickness of 7 mm.
It has further been found advantageous to compress the non-woven fibrous layer as this will typically further enhance the luminance of the light device. The non-woven fibrous layer may be compressed by at least 60%, for example at least 70% or even at least 80% of its uncompressed thickness. Thus, in a particular embodiment, the compressed thickness of the second non-woven fibrous layer in the light device may be between 0.2 and 5 mm, for example between 0.4 and 2 mm. The second non-woven fibrous layer may for example be compressed by sandwiching the non-woven fibrous layer between the light guide and a cover, of a housing. In an alternative embodiment, the non-woven fibrous layer may be compressed and the fibers of the fibrous layer may be bonded together to hold the non-woven fibrous layer in its compressed state. Bonding may be achieved by including at least a portion of meltable fibers in the fibrous layer or by using thermoplastic fibers for the non-woven fibrous layer.

In a particular embodiment, in the light device according to the present invention, a non-woven fibrous layer, for example similar to the fibrous layer on the first major side, is used as a reflective layer on the second major side of the light guide. In a particular variant of this embodiment, a pouch of fibrous material may be used into which the light guide typically together with a light source such as LEDs is inserted. Hence in this case, the light guide is substantially or completely enclosed by a fibrous layer. Such an embodiment may provide a particular cost effective way of producing the light device.

Typically, the second non-woven fibrous layer will be arranged contiguous to the surface of the light guide on its first major side and in direct contact with the surface of the light guide. In other words, in a typical embodiment, the second non-woven fibrous layer is in contact with the surface of the light guide. However, such direct contact of the non-woven fibrous layer and the light guide is not mandatory and it is also possible to leave for example an air gap between the fibrous layer and the light guide.

Typically, for reasons of weight reduction and to provide new design options to car manufacturers, a thin light device is generally preferred. Thus, the thickness of the light device including the housing into which the light guide and the non-woven fibrous layers may be arranged together with optional further layers should be not more than 10 mm, for example between 3 and 7 mm. The thinner or slimmer the light device is, the more flexible the light device is and the more appealing will the light device be. Also, a thin light device will typically offer more possibilities in the applications where such a device can be used. Yet further, a thinner light device will also mean less weight and thus may help reduce fuel consumption of a car that includes such a light device for example as part of a motor vehicle such as a car, a cycle, a bus, a truck, a trailer or a rail car. The light device according to the invention can be used with other vehicles as well.

The light guide for use with the light device can be a hollow or solid light guide. The light guide can vary widely in thickness, but in a typical embodiment, the light guide will have a thickness of not more than 6 mm, for example not more than 3 mm or not more than 2 mm. Generally, a thinner light guide will be preferred where overall thickness of the light device should be as thin as possible. Although the light guide may typically have a generally uniform thickness (within the normal tolerances), it is also contemplated to use a light guide having varying thickness along a side. For example, the light guide may have a wedge like shape. In case the light guide has a varying thickness, the thickness requirement according to the invention should be understood to mean the maximum thickness. Generally, the thickness of the light guide will be between 0.5 and 2 mm, for example between 1 and 1.5 mm.

Suitable light guides include for example those as disclosed in EP 1264134. Such a light guide may comprise a housing defining a light-guiding optical cavity having first and second opposed major faces, and at least one light source arranged to direct light into the cavity from one end, to be guided between the major faces, wherein the first major face comprises a window through which light can be emitted from the optical cavity, and the second major face comprises a sheet material having a specularly-reflecting surface that faces into the cavity and has diffusely-reflecting light extraction elements applied thereto in a predetermined configuration for causing light to be emitted from the optical cavity through the said window. The light extraction elements may be obtained through printing or by causing irregularities at the surface of the light guide.

Similarly, a solid light guide of a transparent polymeric material may be provided whereby light extraction elements are provided by printing or otherwise causing irregularities at the surface of the solid light guide.

In a particular embodiment, the light guide of the light device is a solid light guide comprising a transparent polymeric material having dispersed therein light scattering particles. In a particular embodiment, the light scattering particles used in the light guide may have a refractive index different from the refractive index of the transparent polymeric material of which the light guide is made. Thus, the refractive index of the particles for providing light scattering in the light guide and refractive index of the transparent polymeric material forming the matrix in which the particles are dispersed are different from each other. The difference between the refractive indices can be chosen conveniently by one skilled in the art to obtain the optimal scattering of light within the polymeric matrix of the light guide and to achieve a desired uniform distribution of light in the light guide.

Generally the light scattering particles have a refractive index that is at least by 0.01 units different from the refractive index of the transparent polymeric material forming the matrix in which the particles are dispersed. For example the particles for scattering light have a refractive index that is at least 0.02 units different from the refractive index of the matrix. Typically the difference between the refractive indices of the particles and the transparent polymeric material or the matrix, respectively, is between 0.01 and 0.122, in particular between 0.01 and 0.03.

In a particular embodiment, the refractive index of the particles is higher than the refractive index of the transparent polymeric material in which they are dispersed, for example at least 0.01 higher or at least 0.02 units higher than the refractive index of the transparent polymeric material.

In a particular embodiment, the light scattering particles of the light guide may be distributed in the transparent polymeric material in an amount of 0.01 % to 20% by weight of the transparent polymeric material. For example, the particles for scattering light may be distributed in the matrix in an amount of 0.01% to 20% by weight of the transparent polymeric material. Generally, the particles for scattering light have an average diameter (number average) of between 1 µm and 50 µm, and more preferably of between 2 µm and 20 µm.

In an embodiment, the transparent polymeric material of the light guide matrix comprises at least one of polymethylmethacrylate, polycarbonate, polyester and mixtures thereof. Further, the light scattering particles may be polymeric as well and may comprise at least one of polymethylmethacrylate, polycarbonate, polyester and mixtures thereof.

Generally, polymeric materials that may be used as transparent polymeric material of the light guide include thermoplastic polymers such as polycarbonates, polymethacrylates such as polymethylmethacrylate, polyolefins such as polyethylene and polypropylene, polyesters such as polyethyleneterephthalates and polyethylenenaphthalates, cellulose acetate, polyvinyl chloride and terpolymers of acrylonitrile, styrene and butadiene.
A suitable light guide for the light device may be a light guide available from company Evonik Roehm GmbH, Darmstadt/Germany, under the tradename "Plexiglas® EndLighten" in various thicknesses and with different concentrations of embedded scattering particles.

The light source used for illuminating the light guide along one or more of its sides may comprise light emitting diodes (LEDs) which may for example be arranged in a linear array. For example, the LEDs are typically arranged on a printed circuit board and while common 180 degree emitting LEDs may be used, it may be desirable to use so-called side emitting LEDs that emit light at 90 degree, i.e. in parallel to the printed circuit board on which they are provided. This offers the advantage that upon bending of the light device around the short axis of the major surface of the printed circuit board, an undue amount of stress in the printed circuit board is avoided as the printed circuit board will be arranged in parallel to the light guide. The printed circuit board may be attached to a portion of the major side of the light guide, e. g. by means of adhesive. Suitable adhesives include 3M Transfer Adhesive tape of the type 467MP, Optically Clear Adhesive Tapes of the type 8171, 8172, all of which are available from 3M. Other methods for attaching are conceivable as well.
It will generally also be preferred that the printed circuit board on the side facing the light guide is provided with a reflective surface at least to the extent the printed circuit board overlaps with the light guide. Thus, a reflective surface is preferably provided on the side of the printed circuit board where the LEDs are arranged. To provide a reflective surface on the printed circuit board, it may be coated with a reflective paint or a reflective film may be provided thereon. The reflective surface may be either mirror reflective or diffuse reflective. It will generally be cost effective to provide the reflective surface on the printed circuit board.

In an alternative embodiment use of optical fiber technology may be made to provide for the light source. In one example several optical fibers may be arranged such that their end faces are located opposite to the side of the light guide. As in the case of individual LEDs, the end faces of the optical fibers provide individual light emitting elements. In an alternative design, a light tube or the like optical fiber may be located along and may be contiguous with at least one side of the light guide, with light transmitted through the light tube exiting laterally there from, i. e. not out of the end face of the light tube, and thereby illuminating the light guide.

A good and homogenous and energy-efficient light distribution in the light guide can usually be realized by coupling the light of individual light emitting elements to the light guide by means of optical lenses located at a side of the light guide between the major sides of the light guide. The lens characteristic can be achieved by forming rounded notches in the side face of the light guide wherein each light emitting element has a separate notch associated thereto. These notches can receive the light emitting elements, i.e. the ends of optical fibers or the LEDs which can be either normal LEDs with rounded housings or surface mount device LEDs having a flat structure with a transparent covering material having also lens characteristics. Due to the lens characteristic at the side of the light guide along which the light is coupled to the light guide, the light emitted from the light emitting elements and transmitted into the light guide will be spread within the light guide. Light reflected from the surface of the notches and the remaining areas of the side of the light guide can be reflected back to the side and notches by means of a side reflector and arranged such that the light emitting elements are located between the light guide and the reflector.
A suitable light source for a light device may be an LED of the type NSSW088T, available from Nichia, based in Tokushima, Japan.

In one embodiment, a reflective layer with a mirror-reflective surface may be arranged in the housing. This reflective layer may surround the area, where the printed circuit board bearing the light sources is attached to the light guide, whereby the mirror-reflective surface may face the printed circuit board, the light sources and the light guide, respectively, i. e. this area may be surrounded by the reflective layer like an envelope. This may avoid or reduce so-called hot spots, i. e. light emission of the light sources in a substantially non-diffusive way, as the light sources cannot be seen from the front side of the housing. Also, light emitted by the light sources may be reflected back and directed towards the light guide.
It is also conceivable to arrange a reflective layer with a diffuse reflective surface here, as it was described above. A suitable reflective layer with a mirror-reflective layer is commercially available from company 3M as "3M ESR".
In one embodiment, the light source illuminating the light guide may comprise at least one colored light source, for example at least one colored LED, in order to provide for the emission of colored light as it is required for the above-described function of the light device. Suitable colored LED's are of the type 99-135/RSG HB 7 C, available from company Everlight, Japan.

The light device includes a translucent retro-reflective sheet. Such a retro-reflective sheet is provided on the first major side of the light guide of the light device. In one embodiment, the retro-reflective sheet may be provided between the translucent non-woven fibrous layer and the front cover of the housing, if a separate front cover is provided on the housing. The retro-reflective sheet may be adhered with a suitable transparent adhesive to the cover of the housing or it may be provided within the housing without being adhered to the cover. In an alternative embodiment, the translucent t retro-reflective sheet may be arranged on top of the cover of the housing of the light device. In this embodiment, the sheet may be adhered to the cover or it may be part of a separate display panel that is removably mounted to the light device. In yet a further embodiment, the retro-reflective sheet itself may be used as the cover of the housing and may thus define the cover.

The retro-reflective sheet for use with the present invention may be a semi-transparent or transparent sheet. A transparent retro-reflective sheet for use in connection with the present invention may be a single layer sheet or a multi-layer sheet. The retro-reflective sheet may be a microsphere-based retro-reflective sheet or preferably a so-called cube corner based retro-reflective sheet.

In a typical embodiment, the retro-reflective sheet used is so-called cube corner sheeting. Cube corner sheetings, sometimes referred to as prismatic, micro prismatic, triple mirror or total internal reflection sheetings, typically include a multitude of cube corner elements to retro-reflect incident light. Cube corner retro-reflectors typically include a sheet having a generally planar front surface and an array of cube corner elements protruding from the back surface. Cube corner reflecting elements include generally trihedral structures that have three approximately mutually perpendicular lateral faces meeting in a single corner, i.e. a cube corner. In use, such cube corner retro-reflector is typically arranged with its front surface disposed generally toward the anticipated location of intended observers. Hence, it will generally be arranged in the light device with its reflecting elements facing the light guide and the planar front facing away from the light guide. Light incident on the front surface enters the sheet and passes through the body of the sheet to be reflected by each of the three faces of the elements, so as to exit the front surface in a direction substantially toward the source of the light incident on the front surface. In the case of total internal reflection, the air interface must remain free of dirt, water and adhesive and therefore is enclosed by a sealing film. Alternatively, reflective coatings may be applied on the lateral faces of the cube corners. Suitable reflective coatings that can be applied include semi-transparent reflective metal layers or a dielectric mirror. When the cube corner elements are provided with a reflective coating they can also be used in a configuration where they are generally positioned towards the anticipated location of an intended observer.

Polymers for cube corner sheeting include polycarbonate, polymethylmethacrylate, polyethylene terephthalate, aliphatic polyurethanes, as well as ethylene copolymers and ionomers thereof. Cube corner sheeting may be prepared by casting directly onto a film, such as described in U.S. Patent No. 5,691,846 (Benson, Jr.). Polymers for radiation-cured cube corners include cross-linked acrylates such as multifunctional acrylates or epoxies and acrylated urethanes blended with mono-and multifunctional monomers. Further, cube corners may be cast on to plasticized polyvinyl chloride film for more flexible cast cube corner sheeting. These polymers are often employed for one or more reasons including thermal stability, environmental stability, clarity, excellent release from the tooling or mold, and capability of receiving a reflective coating.

In an embodiment of this invention the cube corner sheeting may have a further polymeric layer bonded to the side of the cube corner sheeting that has the cube corner elements so as to form a plurality of closed cells in which an air interface is provided to the cube corner elements. Illustrative examples of cube corner-based retro-reflective sheeting are disclosed in U.S. Pat. Nos. 4,588,258 (Hoopman); 4,775,219 (Appleton et al.); 4,895,428 (Nelson); 5,138,488 (Screech); 5,387,458 (Paella); 5,450,235 (Smith); 5,605,761 (Burns); 5,614,286 (Bacon Jr.) and 5,691,846 (Benson, Jr.).
The retro-reflective sheet may be of the type 3M Diamond Grade™ Translucent DG³ Reflective Sheeting Series 4090T, available from 3M Company, St. Paul/MN. Other retro-reflective materials are conceivable as well.

In particular embodiments, the light device will be colored to match the color of a desired functionality of the light device. Desired coloring of the light device can be achieved in several ways including the use of colored LEDS, using colored non-woven layers, using a colored light guide, a colored retroreflective sheet, a transparent or translucent colored layer or further transparent or translucent colored films arranged in the housing or adhered to the cover of the housing such as for example 3M ElectroCut™ Film. Furthermore combinations of one or more of these means for coloring may be used. A suitable colored layer may be 3M ElectroCut Film of the type 1171 (yellow color) and 1172 (red color).

In one particular embodiment, the translucent retro-reflective sheet and/or a transparent or translucent colored layer can form an integral part of a light device that includes a housing as described above. For example, the retro-reflective sheet and/or colored layer may be provided on the transparent or translucent cover at the front side of the housing, either on the side of the cover facing the light guide or on the opposite side. In this embodiment, the retro-reflective sheet and the colored layer can be glued to the cover. It is also contemplated to provide the retro-reflective sheet and/or the colored layer on a separate film that may be provided between the cover of the housing of the light device and the non-woven fibrous layers, i.e. arranged inside of the housing.

In another embodiment, the retro-reflective sheet and/or colored layer may be provided on a separate carrier that can be removably attached to the light device. This may be beneficial in that more flexibility and design freedom is given and manufacture may be simplified. For example, the housing comprising the light guide, the light source and at least one non-woven fibrous layer may be provided at a time and the translucent retro-reflective sheet and/or the transparent or translucent colored layer may be provided at a later stage in the manufacturing process.

In a particular embodiment, two or more functional lights are provided in one integral light device housing. For example, a stop light and a blinker may be included in one housing. In one embodiment to achieve a light device including two or more functional lights, the light guide is segmented whereby light does not substantially penetrate from one segment into the other. Hence because of the segmented light guide, illumination of one of the segments will only illuminate the corresponding area of the light device without illuminating other areas. By providing the corresponding areas with different color (by means as described above), different functional lights can be integrated into one light device and operated independent of each other. Also, in a particular embodiment, the second non-woven fibrous layer may also be segmented, i. e. two separate second non-woven fibrous layers may be arranged side-by-side in front of the segmented light guides. This will generally further enhance the light device in that less light will diffuse from one area of the light device into another.

Particularly if at least separate two light guides and/or at least two second non-woven fibrous layers arranged side-by-side are present, i. e. if the light guide and/or the second non-woven fibrous layer is segmented, at least one separator is typically arranged within the housing. The separator has first and second major sides and transverse sides there between. The at least one separator may be arranged between two light guides and extends substantially perpendicular to the front and back side of the housing. Furthermore, the at least one separator may comprise a mirror-reflective or diffuse reflective surface on its first and second sides. The use of such a separator will generally further minimize any light diffusing into unwanted areas of the light device, in particular of neighbouring areas where one is desired to be illuminated but not the other. In an alternative embodiment instead of a separator a reflective layer may be provided on the sides of the adjacent light guides, which are facing towards each other.

In a particular embodiment, the light device has a shape and size as prescribed by the relevant country law or regulation.

In one embodiment, the light device includes at least one cut-out area in the light guides, in the second non-woven fibrous layer as well as in the retro-reflective sheet to provide non-retro-reflective areas. A light source is arranged behind the at least one cut-out area, whereby the light emission of the light source is through the cut-out area in a substantially non-diffused way. In this way, a non-diffuse light such as for example a back light where more focused light is desired can be provided.
Preferably, the light sources, which are arranged behind the cut-outs, are oriented with their main extension perpendicular with respect to the light guide and are emitting light focused towards the front side of the housing. Suitable light sources are of the type "XLamp® MC-E LED", available from company Cree, USA.

In one aspect a vehicle is provided comprising at least one light device as described above arranged at the rear of the vehicle. In a typical embodiment, two light devices are arranged near the left and right edges of the vehicle body, whereby the light devices may optionally extend to the sides of the vehicle body. Furthermore, the vehicle may comprise, in addition to the light devices arranged near the edges of the vehicle rear, a further light device at its rear arranged at or near the middle of the rear in order to provide a third stop light. Typically, the light device as described herein will be used with a motor vehicle.
The light device may be manufactured with the following steps:
- providing a housing with a back side and a front side as described above
- providing a first and a second non-woven fibrous layer as described above
- providing a light guide as described above
- providing a reflective sheet as described above, either as separate layer or as coating on the surface of the back side of the housing, facing with its reflective surface towards the second major side of the light guide
- providing a printed circuit board bearing at least one light source thereon
- providing a retro-reflective sheet as described above, optionally with the addition of colored films as described above on the outer surface of the front side of the housing such that the cube-corner elements facing away from the light guide
- optionally providing a mirror-reflective or diffuse reflective layer, wrapped around the area where the printed circuit board is attached to the light guide
- optionally providing a clear transparent optional cover at the front side of the housing
- assembling the first and second non-woven layers, the reflective layer, the printed circuit board with the light source and the light guide in the housing, such that:
   o the light guide faces with its second major side towards the back side of the housing,
   o the print circuit board with the light sources facing towards the second major side of the light guide,
   o the first non-woven fibrous layer is arranged between the back side of the housing and the second major side of the light guide,
   o the first non-woven fibrous layer is arranged between the first major side of the light guide and the front side of the housing
- optionally sealing the back side and the front side of the housing, and optional sides of the housing, together at a sealed edge, for example by means of adhesive, thermobonding, mechanical interlocking or any other suitable method in order to prevent environmental influences to the light device, e. g. adhering the sides of the housing together or using an optional sealing material between the sides of the housing.

The light device may be mounted to a vehicle by conventional methods for mounting light devices to a vehicle, for example using screws, clips, clamps, other positive locking means, adhesive or any other suitable means which are apparent to a skilled person.

The invention will be described in detail with reference to the following drawings which are included merely for illustrative purposes. Unless otherwise indicated, the drawings are schematic and features presented therein may not be to scale nor would their proportions to other features in the drawings be.

### Brief description of the drawings

Figure 1a schematically represents an exploded view of one embodiment of a light device in accordance with the invention.
Figure 1b schematically represents a cross-section of the light device as shown in fig. 1, seen along a cut-line as indicated in fig. 1a.
Figure 1c schematically represents a cross-section of the light device as shown in fig. 1, seen along a cut-line as indicated in fig. 1a. Figure 1d schematically represents a cross-section of the light device as shown in fig. 1, seen along a cut-line as indicated in fig. 1a.
Figure 2a schematically represents a top view of another embodiment of the light device in accordance with the invention.
Figure 2b schematically represents a cross-section of the light device as shown in fig. 2a, seen along a cut-line as indicated in fig. 2a.
Figure 2c schematically represents a top view of a part of the light device in accordance with the invention as can be seen in figure 2a.
Figure 3a schematically represents an exploded view of another embodiment of the light device in accordance with the invention.
Figure 3b schematically represents a cross-section of the light device as shown in fig. 3a, seen along a cut-line as indicated in fig. 3a.
Figure 3c schematically represents a cross-section of the light device as shown in fig. 3a, seen along a cut-line as indicated in fig. 3a.
Figure 3d schematically represents a cross-section of the light device as shown in fig. 3a, seen along a cut-line as indicated in fig. 3a.

### Detailed description of the drawings

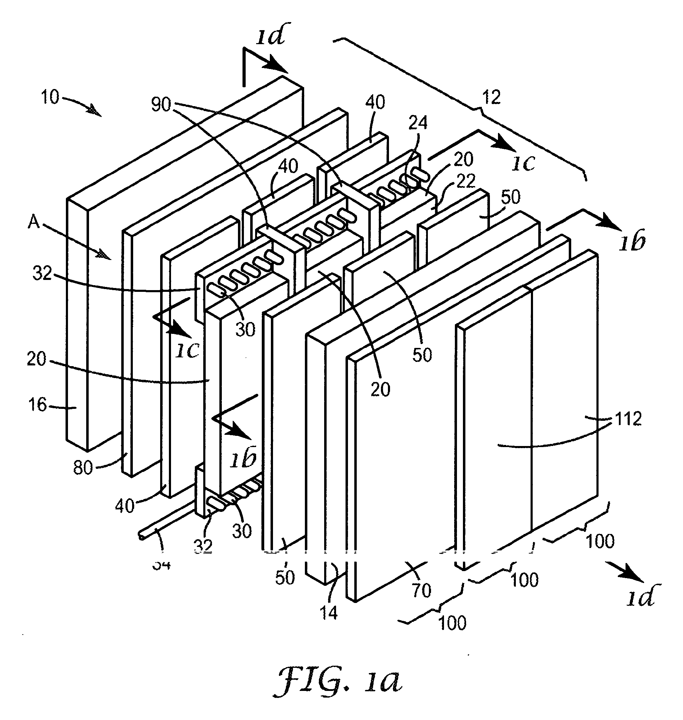

In figure 1a, an exploded view of the light device 10 according to the invention is shown, which includes a housing 12. The housing 12 comprises a clear transparent front side 14 and an opaque back side 16, which are opposite to each other.

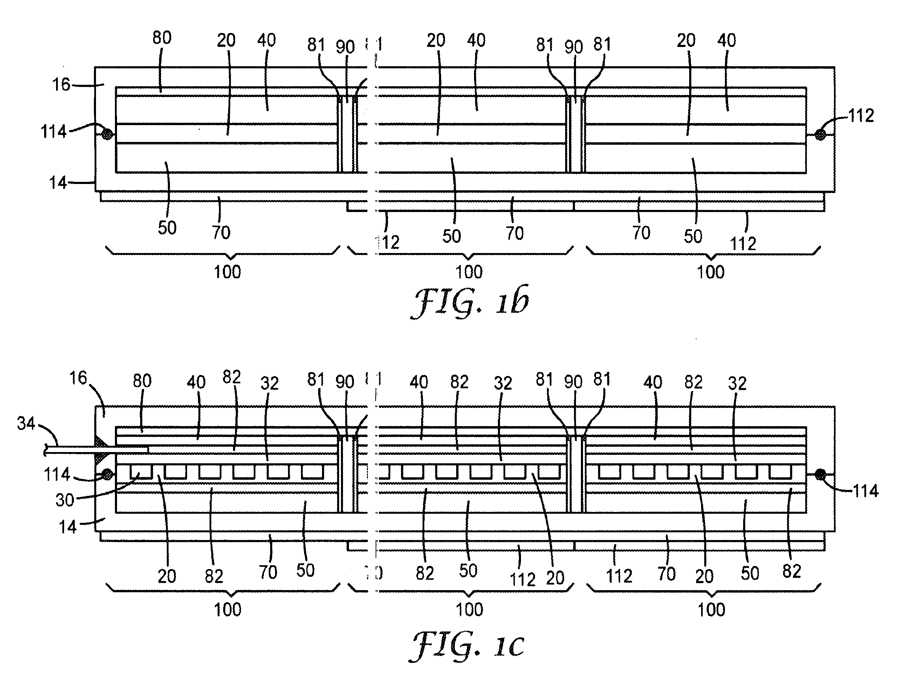

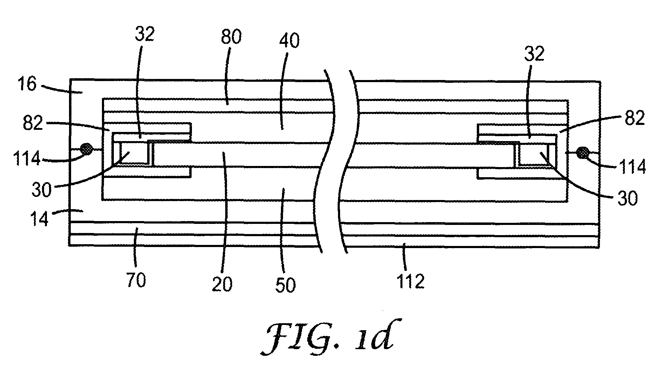

In fig. 1a, certain features and parts of the light device have been omitted for the sake of clarity.
The front side 14 and the back side 16 of the housing 12 are sealed together at a sealed edge 114, which is not visible in fig. 1a (see figs. 1b, 1c and 1d for this). Also, a reflective layer 82, which surrounds the area where the PCB 32 is attached to the light guide 20, is not shown in fig. 1a (see figs. 1c and 1d for this). Furthermore, the reflective layer 81, which is arranged on both major sides of the separator 90, cannot be seen in fig. 1a (see figs. 1b and 1c for this).

The direction from the back to the front is illustrated by arrow A. This is also substantially the direction of light emission from the light device.

In the housing 12, a light guide 20 is arranged having a first major side 22 and a second major side 24. The light guide 20 is segmented into three light guides 20 which are arranged side-by-side. On the second major side 24 of the light guide 20, a printed circuit board (PCB) 32 bearing light sources 30 on its surface is arranged. The PCB 32 is also segmented into three PCB's 32, but in two rows with three PCB's 32 each, whereby three PCB's 32 are arranged on each, the upper and lower sides of the housing in a rows with three PCB's, i.e. six PCB's 32 are arranged in the light device in total (not all of which are visible). Each PCB 32 bears six light sources (LED's) 30. The arrays of light sources 30, only parts of which can be seen here, face the second major sides 24 of the light guides 20 for coupling light into the light guides 20. An electrical cable 34, only one of which is shown here, is provided and connected to the light sources 30 on the PCB in order to power the light sources 30. The electrical cable 34 is on the other hand electrically connected to the electrical system of the vehicle, on which the light device is used (not shown).
PCB's 32 are attached to the light guides 20 by means of adhesive (not visible).

Further in the housing 12, a first non-woven fibrous layer 40 is arranged between the second major side 24 of the light guide 20 and the back side 16 of the housing. A second non-woven fibrous layer 50 is arranged in the housing 12 on the first major side 22 of the light guide 20. The first and second non-woven fibrous layer 40, 50 are segmented into three separate layer each arranged side-by-side on the first major sides 22 of the three light guides 20. The three separate first and second non-woven fibrous layers 40, 50 are contiguous with the first major side 22 of the light guides 20.
Moreover, a translucent retro-reflective sheet 70 is arranged side-by-side on the outer side of the front side 14 of the housing 12 such that the major side of the translucent retro-reflective sheet 70 bearing cube-corner elements (not visible in fig. 1a) is facing away from the first major side 12 of the light guide 20.
The translucent retro-reflective sheet 70 forms - together with a first and second non-woven fibrous layer 40, 50, a light guide 20 and a light source 30 - a functional light 100.

A reflective layer 80 with a diffuse reflective surface is provided between the back side 16 of the housing 12 and the first non-woven fibrous layer 40 such that the reflective surface of the reflective layer 80 is facing towards the second major side 24 of the light guide 20.

Between the three separate light guides 20, two separators 90 are arranged such that one separator 90 is arranged between two adjacent light guides 20. The separators 90 extend between the PCB's 32 substantially perpendicular to the front side 14 and back side 16 of the housing 12 and are being clamped between the front side 14 and back side 16 of the housing 12 in order to keep the separators 90 in position. Seen in the direction A, the separators 90 extend between the first non-woven fibrous layer 40, the PCB's 32, the light guides 20 and the second non-woven fibrous layers 50.
If one functional light 100 is operated, due to the separators 90, unwanted illumination of another, adjacent functional light 100 is substantially prevented. The separators 90 are extending sufficiently far away from the PCB 32 in order to separate not only the separate light guides 20, but also the separate second non-woven fibrous layer 50 (not visible in fig. 1a, see fig. 1b) from each other. This will further minimize the unwanted illumination of the adjacent functional lights as outlined above.
A reflective layer 81 (see fig. 1b) with a diffuse-reflective surface is attached to the separator 90 on both of the major sides of the separator 90 with its diffuse-reflecting surface facing towards the light guide 20. This may increase the above-described separation by reflecting light shining onto the separator 90 back towards and into the light guide 20.

In figure 1b, a cross-sectional view of the light device as shown in fig. 1a along a cut line as indicated in fig. 1a. In fig. 1b, it can be seen that the separators 90 extend to the area between the first non-woven fibrous layer 40, the separate light guide 20, the separate second non-woven fibrous layers 50 and the separate PCB's 32 in order to prevent unwanted illumination of adjacent functional lights 100. The separators 90 are being clamped between the front side 14 and back side 16 of the housing 12 in order to keep the separators 90 in position.
A reflective layer 81 is arranged on both major sides of the separator 90 with its diffuse reflective surface facing towards the light guide 20.

In figure 1b, also the translucent retro-reflective sheet 70 in front of the front side 14 is visible. Furthermore, the transparent colored layer 112 is visible, which is for two colored stripes arranged in front of the translucent retro-reflective sheet 70. (see fig. 1a).

Figs. 1b to 1d show a sealed edge 114, at which the front side 14 and the back side 16 of the housing are attached and sealed to each other, respectively, for example by means of adhesive, thermobonding, mechanical interlocking or any other suitable method.
A reflective layer 81 with a diffuse-reflective surface is attached to the separator 90 on both of the major sides of the separator 90 with its diffuse-reflecting surface facing towards the light guide 20. This may increase the above-described separation by reflecting light shining onto the separator 90 back towards and into the light guide 20.

In figure 1c, a cross-sectional view of the light device as shown in fig. 1a along a cut line as indicated in fig. 1a representing a cut at a different position. In fig. 1b, it can be seen that the separators 90 extend to the area between the first non-woven fibrous layer 40, the separate light guide 20, the separate second non-woven fibrous layers 50 and the separate PCB's 32 in order to prevent unwanted illumination of adjacent functional lights 100. As described under fig. 1b, a reflective layer 81 is arranged on both major sides of the separator 90 facing with its diffuse-reflective surface towards the light guide 20.
In figure 1c, also the light source 30 and the printed circuit board 32 can be seen (not visible in figure 1b due to the different location of the cut line).
Also, in figure 1c, the translucent retro-reflective sheet 70 in front of the front side 14 and the transparent colored layer 112 is visible, which is for two colored stripes arranged in front of the translucent retro-reflective sheet 70 (see fig. 1a).

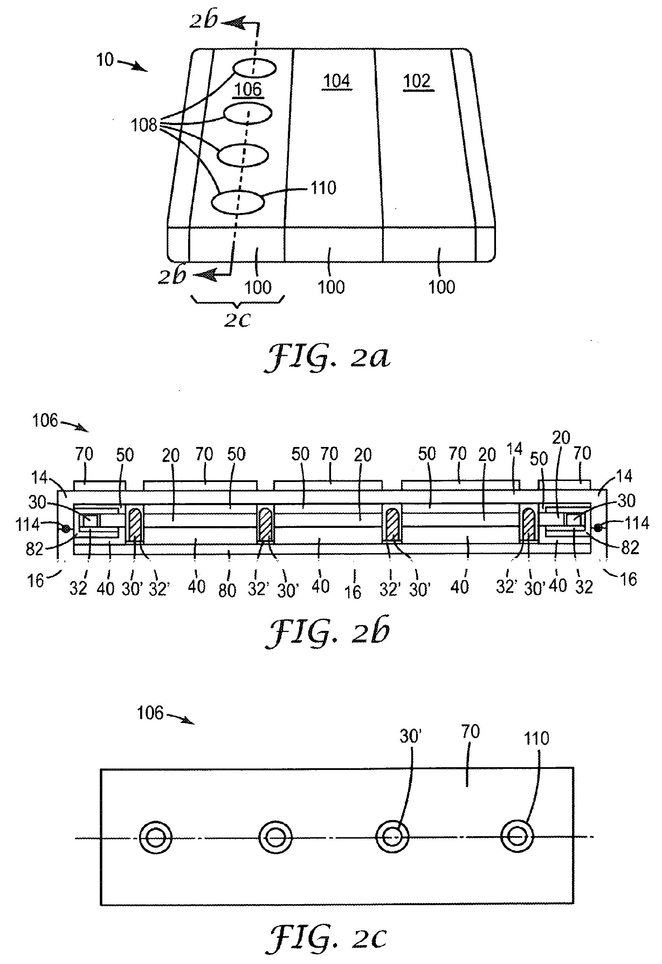

Fig. 1d is a cross-sectional view of the embodiment of the light device as shown in fig. 1a as it is indicated in fig. 1a. The PCB's 32 bearing the LED's 30 can be seen, whereby the PCB's 32 are attached with an end portion to a portion of the light guide 20 at the opposing side of the light guide 20 for example by means of an adhesive (not visible).
Furthermore, a mirror-reflective layer 82 surrounds the area of the PCB's 32, LED's 30 and the section of the light guide 20, where PCB's 32 are attached thereto, with its reflective surface facing towards the PCB's 32, LED's 30, respectively, by means of adhesive, which is not visible in fig. 1d. This will help avoiding so-called hot spots of light emission as the light sources 30 cannot be seen from the front of the light device 10 (see fig. 1d as well). Also, light emitted by the light sources 30 will be reflected back and directed towards the light guide 20.
In figure 1d, also the translucent retro-reflective sheet 70 in front of the front side 14 is visible. Furthermore, the transparent colored layer 112 is visible, which is for two colored stripes arranged in front of the translucent retro-reflective sheet 70. (see fig. 1a).
Another embodiment of the light device 10 is shown in figures 2a and b. Figure 2a shows in a schematic view an enhanced back-up light, which is provided at the functional light 100 formed by the back-up light 108. by providing cut-out areas 110. The cut-out areas 110 allow light extraction from the light sources 30, which are located in the area of the cut-out areas 110, i. e. behind the cut-out areas 110.
However, the light sources 30 cannot be seen in fig. 2a, please see fig. 2b for this.
The cut-out areas 110 are provided by cutting a hole in the translucent retro-reflective sheet 70, the second non-woven fibrous layer 50, and the light guide 20, which cannot be seen in fig. 2a, but which is illustrated in fig. 2b. This provides for direct light emission of the light sources 30' located in the area of the cut-out areas 110 in a substantially non-diffused way, i. e. without diffraction by the light guide 20 and/or the second non-woven 50.
Figure 2c shows a top view of an enhanced back-up light 108 of the embodiment as shown in fig. 2a, whereby LED's 30' are arranged so that these emit light in a substantially non-diffused way through the cut-outs 110. The light sources 30' differ from the light sources 30 as they emit light substantially focused towards the front side 14 of the housing 12. The light sources 30' are mounted on the PCB's 32', which are attached to the reflective layer 80 by means of adhesive (not visible in fig.2b).

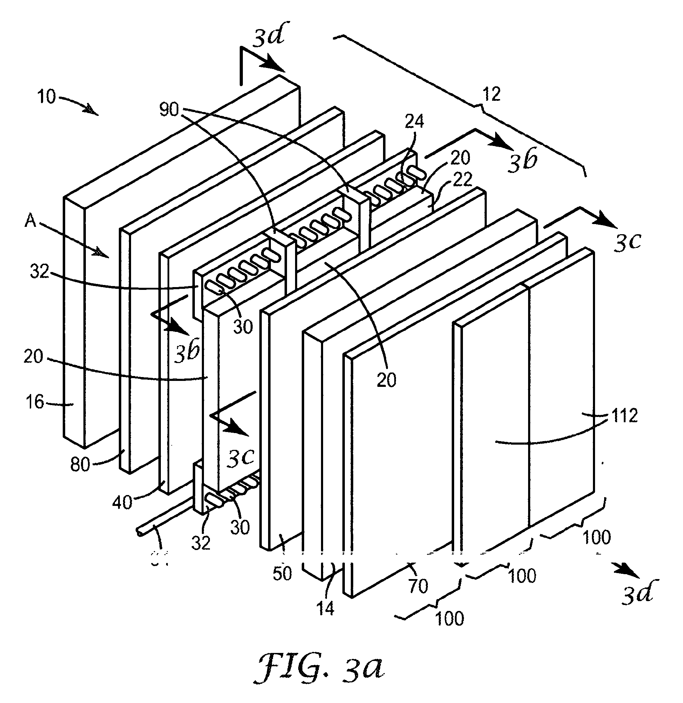

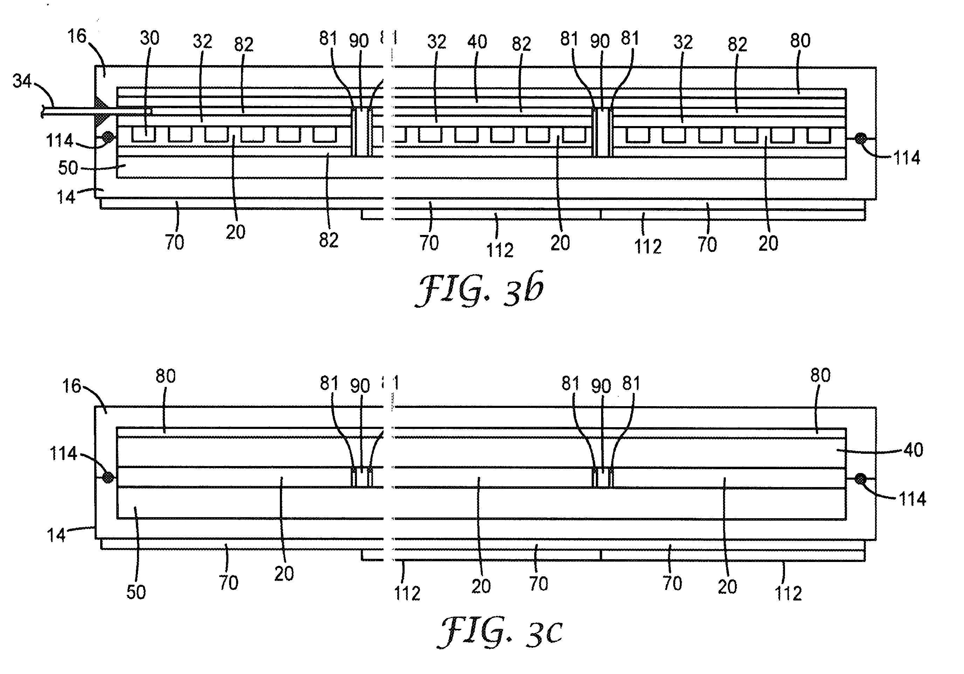

Figs. 3a to 3d show another embodiment of the light device, whereby fig. 3a is an exploded view and In figures 3b to 3c, the embodiment of fig. 3a is shown in a schematical cross-sectional view. Different to the embodiment of figs. 1a to 1d, only one first and second non-woven fibrous layer 40, 50 is arranged within the housing, i. e. no segments of these layers 40, 50 are present. Further differences are detailed below.

In figure 3a, a housing 12 is shown comprises a clear transparent front side 14 and an opaque back side 16, which are opposite to each other.

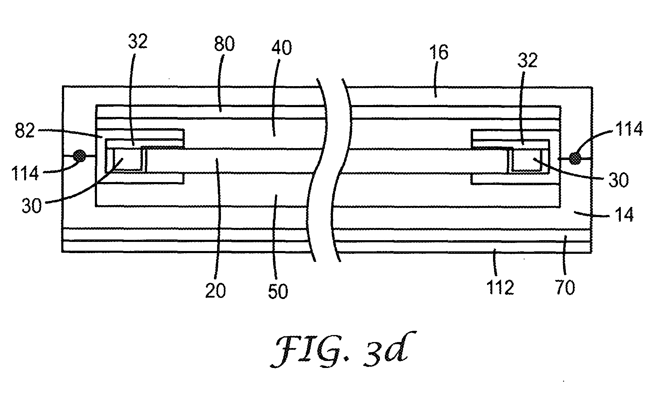

In fig. 3a, certain features and parts of the light device have been omitted for the sake of clarity.
The front side 14 and the back side 16 of the housing 12 are sealed together at a sealed edge 114, which is not visible in fig. 3a (see figs. 3b, 3c and 3d for this). Also, a reflective layer 82, which surrounds the area where the PCB 32 is attached to the light guide 20, is not shown in fig. 3a (please see figs. 3c and 3d for this). Furthermore, the reflective layer 81, which is arranged on both major sides of the separator 90, cannot be seen in fig. 3a (please see figs. 3b and 3c for this).

The direction from the back to the front is illustrated by arrow A. This is also substantially the direction of light emission from the light device.

In the housing 12, a light guide 20 is arranged having a first major side 22 and a second major side 24. The light guide 20 is segmented into three light guides 20 which are arranged side-by-side. On the second major side 24 of the light guide 20, a printed circuit board (PCB) 32 bearing light sources 30 on its surface is arranged. The PCB 32 is also segmented into three PCB's 32, but in two rows with three PCB's 32 each, whereby three PCB's 32 are arranged on each, the upper and lower sides of the housing in a rows with three PCB's, i. e. six PCB's 32 are arranged in the light device in total (not all of which are visible). Each PCB 32 bears six light sources (LED's) 30. The arrays of light sources 30, only parts of which can be seen here, face the second major sides 24 of the light guides 20 for coupling light into the light guides 20. An electrical cable 34, only one of which is shown here, is provided and connected to the light sources 30 on the PCB in order to power the light sources 30. The electrical cable 34 is on the other hand electrically connected to the electrical system of the vehicle, on which the light device is used (not shown).

Further in the housing 12, a first non-woven fibrous layer 40 is arranged between the second major side 24 of the light guide 20 and the back side 16 of the housing. A second non-woven fibrous layer 50 is arranged in the housing 12 on the first major side 22 of the light guide 20. The first and second non-woven fibrous layers 40, 50 are contiguous with the first major side 22 of the light guides 20.

Here, only the light guides 20 are segmented into three separate light guides 20 in the housing 12, the separators 90 are arranged with a different extension perpendicular to the major sides of the light guide 20 here. This means that the separators 90 have a lower height as they only extend substantially between the light sources 30 and PCB's 32 compared to the separators 90 of the embodiment as shown in fig. 1a. Different to the embodiment as shown in figs. 1a to 1d, the separators 90 are not located between the three segments of the each of the first and second non-woven fibrous layers 40, 50 as in figs. 1a to 1d, but between the segments of the light guide 20. In the embodiment as shown in fig. 3a, the separators 90 are being clamped between the first and the second non-woven fibrous layers 40, 50.
PCB's 32 are attached to the light guides 20 by means of adhesive (not visible).

Also, as can be seen in figs. 3a to 3c, only one second non-woven fibrous layer 50 is arranged in the housing 12 on the first major side 22 of the light guide 20. Also, only one first non-woven fibrous layer 40 is arranged in the housing 12 on the second major side 24 of the light guide 20.
Similar to the embodiment as shown in figs. 1a - 1d, a reflective layer 81 is arranged on both major sides of the separator 90 with its diffuse reflective surface facing towards the light guide 20 as can be seen in figs 3b and 3c.
Furthermore, six arrays of light sources 30, only part of which can be seen here, are arranged on a PCB 32 in the housing 12 in order to illuminate each one of the functional lights 100.
In figure 3a, also the translucent retro-reflective sheet 70 in front of the front side 14 is visible. Furthermore, the transparent colored layer 112 is not visible, which is for two colored stripes arranged in front of the translucent retro-reflective sheet 70, please see figures 1b and 1c for this.

Figure 3b represents a cut along line as indicated in fig. 3a. Different to the embodiment of figs. 1a to 1d, the separators 90 do not extend between the first and the second non-woven fibrous layer 90. Instead, the separators 90 are located only between the segmented light guides 20 and the PCB's 32.
In figure 3b, also the translucent retro-reflective sheet 70 in front of the front side 14 is visible. Furthermore, the transparent colored layer 112 is visible, which is for two colored stripes arranged in front of the translucent retro-reflective sheet 70.
As can be seen in fig. 3b, the separators 90 are being clamped between the first and second non-woven fibrous layers 40, 50. Three arrays with six light sources 30 each are visible here as well. The mirror-reflective layer 82, which surrounds the area, where the PCB's 32 are attached to the light guide 20, can be seen here.

Figure 3c represents a cut along line as indicated in fig. 3a. The embodiment shown here differs from the embodiment of fig. 1b in that only one first and one second non-woven fibrous layer 40, 50 are arranged in the housing 12, i. e. the first and second non-woven fibrous layers 40, 50 are not segmented as in the embodiment of figs. 1a to 1d. The separators 90 have a smaller extension seen perpendicular to the major sides 22, 24 of the light guide 20 in fig. 3c compared to fig. 1b. The separators 90 in fig. 3c are being clamped between the first and second non-woven fibrous layer 40, 50. Also, the sealed edge 114, at which the front side 14 and the back side 16 of the housing are sealed and attached together, respectively, for example by means of adhesive, thermobonding, mechanical interlocking or any other suitable method, can be seen in fig. 3c. The light sources 30 cannot be seen in this view, please see fig. 3b for the three light sources 30 of this embodiment.
Also, in figure 3c, the translucent retro-reflective sheet 70 in front of the front side 14 and the transparent colored layer 112 is visible, which is for two colored stripes arranged in front of the translucent retro-reflective sheet 70.

Figure 3d is a cross-sectional view of the embodiment of the light device as shown in fig. 3a as it is indicated in fig. 3a. The PCB's 32 bearing the LED's 30 can be seen, whereby the PCB's 32 are attached with an end portion to a portion of the light guide 20 at the opposing side of the light guide 20 for example by means of an adhesive (not visible). The first and second non-woven fibrous layers 40, 50 are arranged within the housing 12. A translucent retro-reflective sheet 70 is arranged at the front side 14 of the housing. Also, a transparent colored layer 112 is arranged on the translucent retro-reflective sheet 70.
Furthermore, a mirror-reflective layer 82 surrounds the area of the PCB's 32, LED's 30 and the section of the light guide 20, where PCB's 32 are attached thereto, with its reflective surface facing towards the PCB's 32, LED's 30, respectively. This will help avoiding so-called hot spots of light emission as the light sources 30 cannot be seen from the front of the light device 10 (see fig. 1d as well). Also, light emitted by the light sources 30 will be reflected back and directed towards the light guide 20.

## Claims

1. Light device (10) comprising:
a. a housing (12) having a front side (14) through which light can be emitted and an opposite back side (16),
b. arranged in the housing (12):
i. at least one light guide (20) having opposite first (22) and second major side (24) and one or more sides there between, said first major side (22) facing towards said front side (14) of said housing and said second major side (24) facing towards the back side (16) of said housing;
ii. at least one light source (30) arranged along at least a portion of at least one side face of the light guide (20) for coupling light into said light guide (20); and
iii. a first non-woven fibrous layer (40) arranged between the second major side (24) of said light guide and said back side (16) of the housing (12);
c. at least one transparent retro-reflective sheet (70) being arranged on the front side (14) of said housing (12), **characterized in that**
within said housing (12) there is further arranged second non-woven fibrous layer (50) on the first major side (22) of said light guide (20) and said second non-woven fibrous layer (50) being translucent and wherein said at least one transparent retro-reflective sheet (70) has on a major side a plurality of cube corner elements.

2. Light device according to claim 1, further comprising a transparent cover.

3. Light device according to claim 1 or 2, wherein the at least one light guide is made of transparent polymeric material having dispersed therein light scattering particles.

4. Light device according to any of claims 1 to 3, wherein the at least one light source is a light-emitting diode.

5. Light device according to any of claims 1 to 4, wherein said first and second non-woven fibrous layers are in contact with a surface of the at least one light guide and are contiguous thereto.

6. Light device according to any of claims 1 to 5, further comprising a light enhancement film arranged on the back side of said housing and having a diffuse reflective surface facing the first non-woven fibrous layer.

7. Light device according to any of claims 1 to 6, comprising at least one colored stripe to define a functional light on a vehicle.

8. Light device according to any of claims 1 to 6, comprising two or more colored areas of different color arranged alongside each other wherein each area defines a different functional light selected from a back light, a blinker, a back-up light and a stop light.

9. Light device according to claim 8, further comprising at least two or more light guides each associated with a colored area, at least one separator having first and second major sides and transverse sides there between, said at least one separator is arranged within the housing between two light guides such that said first and second major sides of said separator extend substantially perpendicular to the front and back sides of said housing, said at least one separator comprises a reflective surface on said first and second major sides.

10. Light device according to any of claims 1 to 9 comprising cut-out areas in the at least one retro-reflective sheet and in the least one light guide to provide non-retro-reflective areas behind which is arranged a light source.

11. Vehicle comprising a light device according to any of claims 1 to 10.

12. Vehicle according to claim 11 wherein the light device is arranged at the exterior body of the vehicle.

13. Vehicle according to claim 11 or 12 arranged at the rear of the vehicle.

14. Vehicle according to claim 13 wherein the light device extends beyond the edges of the vehicle, so that they also at least partially extend into the sides of the vehicle.

15. Vehicle according to claim 11, wherein the vehicle is a motor vehicle.

## Patentansprüche

1. Lichtvorrichtung (10), umfassend:
a. ein Gehäuse (12) mit einer Vorderseite (14), durch welche Licht ausgestrahlt werden kann, und mit einer gegenüberliegenden Rückseite (16),
b. wobei in dem Gehäuse (12) angeordnet sind:
i. wenigstens eine Lichtführung (20) mit gegenüberliegender erster (22) und zweiter Hauptseite (24) und einer oder mehrerer Seiten ebendort dazwischen, wobei die erste Hauptseite (22) in Richtung der Vorderseite (14) des Gehäuses gewandt ist und die zweite Hauptseite (24) in Richtung der Rückseite (16) des Gehäuses gewandt ist;
ii. wenigstens eine Lichtquelle (30), welche entlang wenigstens eines Abschnitts von wenigstens einer Seitenfläche der Lichtführung (20) zum Speisen von Licht in die Lichtführung (20) angeordnet ist; und
iii. eine erste nicht gewebte Faserlage (40), welche zwischen der zweiten Hauptseite (24) der Lichtführung und der Rückseite (16) des Gehäuses (12) angeordnet ist;
c. wenigstens eine durchsichtige zurückreflektierende Bahn (70), welche an der Vorderseite (14) des Gehäuses (12) angeordnet ist, **dadurch gekennzeichnet, dass**
innerhalb des Gehäuses (12) des Weiteren eine zweite nicht gewebte Faserlage (50) auf der ersten Hauptseite (22) der Lichtführung (20) angeordnet ist und die zweite nicht gewebte Faserlage (50) durchscheinend ist und wobei die wenigstens eine durchsichtige zurückreflektierende Bahn (70) auf einer Hauptseite eine Mehrzahl von kubischen Eckelementen aufweist.

2. Lichtvorrichtung nach Anspruch 1, des Weiteren umfassend eine durchsichtige Abdeckung.

3. Lichtvorrichtung nach Anspruch 1 oder 2, wobei die wenigstens eine Lichtführung aus einem durchsichtigen Polymermaterial hergestellt ist, welches darin lichtzerstreuende Partikel eingestreut hat.

4. Lichtvorrichtung nach einem beliebigen der Ansprüche 1 bis 3, wobei die wenigstens eine Lichtquelle eine lichtemittierende Diode ist.

5. Lichtvorrichtung nach einem beliebigen der Ansprüche 1 bis 4, wobei die erste und zweite nicht gewebte Faserlage in Kontakt mit einer Oberfläche der wenigstens einen Lichtführung stehen und daran anhaftend sind.

6. Lichtvorrichtung nach einem beliebigen der Ansprüche 1 bis 5, des Weiteren umfassend einen lichtverstärkenden Film, welcher auf der Rückseite des Gehäuses angeordnet ist und eine diffuse reflektierende Oberfläche aufweist, welche der ersten nicht gewebten Faserlage zugewandt ist.

7. Lichtvorrichtung nach einem beliebigen der Ansprüche 1 bis 6, umfassend wenigstens einen eingefärbten Streifen, um ein funktionales Licht auf einem Fahrzeug zu definieren.

8. Lichtvorrichtung nach einem beliebigen der Ansprüche 1 bis 6, umfassend zwei oder mehr gefärbte Bereiche von unterschiedlicher Farbe, welche nebeneinander angeordnet sind, wobei jeder Bereich ein unterschiedliches funktionales Licht definiert, das aus der Gruppe, bestehend aus Rücklicht, Blinklicht, Rückfahrlicht und Bremslicht, ausgewählt ist.

9. Lichtvorrichtung nach Anspruch 8, des Weiteren umfassend wenigstens zwei oder mehr Lichtführungen, von denen jede einem gefärbten Bereich beigefügt ist, wenigstens ein Trennelement, welches erste und zweite Hauptseiten und Querseiten dazwischen aufweist, wobei das wenigstens eine Trennelement innerhalb des Gehäuses zwischen zwei Lichtführungen so angeordnet ist, dass die erste und die zweite Hauptseite des Trennelements sich im Wesentlichen senkrecht zur Vorderseite und zur Rückseite des Gehäuses erstreckt, wobei das wenigstens eine Trennelement eine reflektierende Oberfläche auf der ersten und der zweiten Hauptseite umfasst.

10. Lichtvorrichtung nach einem beliebigen der Ansprüche 1 bis 9, umfassend Ausschnittbereiche in der wenigstens einen zurückreflektierenden Bahn und in der wenigstens einen Lichtführung, um nicht zurückreflektierende Bereiche bereitzustellen, hinter denen eine Lichtquelle angeordnet ist.

11. Fahrzeug, umfassend eine Lichtvorrichtung nach einem beliebigen der Ansprüche 1 bis 10.

12. Fahrzeug nach Anspruch 11, wobei die Lichtvorrichtung an einer äußeren Karosserie des Fahrzeugs angeordnet ist.

13. Fahrzeug nach Anspruch 11 oder 12, wobei die Lichtvorrichtung im hinteren Teil des Fahrzeugs angeordnet ist.

14. Fahrzeug nach Anspruch 13, wobei die Lichtvorrichtung sich über die Kanten des Fahrzeugs erstreckt, so dass sie sich auch wenigstens teilweise in die Seite des Fahrzeugs erstreckt.

15. Fahrzeug nach Anspruch 11, wobei das Fahrzeug ein Kraftfahrzeug ist.

## Revendications

1. Dispositif d'éclairage (10) comprenant :
a. un logement (12) doté d'un côté avant (14) à travers lequel de la lumière peut être émise, et un côté arrière opposé (16),
b. avec, agencés dans le logement (12) :
i. au moins un guide de lumière (20) présentant un premier côté principal (22) et un deuxième côté principal (24) opposés et entre eux un ou plusieurs côtés, ledit premier côté principal (22) étant orienté vers ledit côté avant (14) dudit logement et ledit deuxième côté principal (24) étant orienté vers le côté arrière (16) dudit logement,
ii. au moins une source de lumière (30) agencée sur au moins une partie d'au moins un côté latéral du guide de lumière (20) pour injecter la lumière dans ledit guide de lumière (20) et
iii. une première couche (40) en fibres non tissées agencée entre le deuxième côté principal (24) dudit guide de lumière et ledit côté arrière (16) du logement (12),
c. au moins une feuille (70) transparente et rétroréfléchissante agencée sur le côté avant (14) dudit logement (12),
**caractérisé en ce que**
à l'intérieur dudit logement (12), une deuxième couche (50) de fibres non tissées est en outre agencée sur le premier côté principal (22) dudit guide de lumière (20), et ladite deuxième couche (50) de fibres non tissées étant translucide et ladite ou lesdites feuilles (70) transparentes et rétroréfléchissantes présentant sur un côté principal plusieurs éléments en sommet de cube.

2. Dispositif d'éclairage selon la revendication 1, comportant en outre un recouvrement transparent.

3. Dispositif d'éclairage selon les revendications 1 ou 2, dans lequel le ou les guides de lumière sont constitués d'un matériau polymère transparent dans lequel sont dispersées des particules diffusant la lumière.

4. Dispositif d'éclairage selon l'une quelconque des revendications 1 à 3, dans lequel la ou les sources de lumière sont des diodes luminescentes.

5. Dispositif d'éclairage selon l'une quelconque des revendications 1 à 4, dans lequel ladite première et ladite deuxième couche de fibres non tissées sont en contact avec une surface dudit ou desdits guides de lumière et leur sont contiguës.

6. Dispositif d'éclairage selon l'une quelconque des revendications 1 à 5, comportant en outre un film de renforcement de lumière agencé sur le côté arrière dudit logement et présentant une surface réfléchissant la lumière diffuse orientée vers la première couche de fibres non tissées.

7. Dispositif d'éclairage selon l'une quelconque des revendications 1 à 6, comportant au moins une bande colorée qui définit une lumière fonctionnelle sur un véhicule.

8. Dispositif d'éclairage selon l'une quelconque des revendications 1 à 6, comportant deux ou plusieurs zones colorées de couleurs différentes agencées le long l'une de l'autre, chaque zone définissant un feu fonctionnel différent sélectioné parmi un feu arrière, un clignotant, un feu de soutien ou un feu stop.

9. Dispositif d'éclairage selon la revendication 8, comprenant en outre au moins deux ou plusieurs guides de lumière, chacun associé à une zone colorée, au moins un séparateur présentant un premier et un deuxième côté principal avec entre eux des côtés transversaux, ledit ou lesdits séparateurs étant agencés à l'intérieur du logement entre deux guides de lumière de telle sorte que ledit premier et ledit deuxième côté principal dudit séparateur s'étendent essentiellement à la perpendiculaire du côté avant et du côté arrière dudit logement, ledit ou lesdits séparateurs comportant une surface réfléchissante sur ledit premier et ledit deuxième côté principal.

10. Dispositif d'éclairage selon l'une quelconque des revendications 1 à 9, comprenant des zones découpées dans la ou les feuilles rétroréfléchissantes et dans le ou les guides de lumière de manière à fournir des zones non rétroréfléchissantes derrière lesquelles est agencée une source de lumière.

11. Véhicule comportant un dispositif d'éclairage selon l'une quelconque des revendications 1 à 10.

12. Véhicule selon la revendication 11, dans lequel le dispositif d'éclairage est agencé sur le corps extérieur du véhicule.

13. Véhicule selon les revendications 11 ou 12, agencé à l'arrière du véhicule.

14. Véhicule selon la revendication 13, dans lequel le dispositif d'éclairage s'étend au-delà des bords du véhicule de telle sorte qu'il s'étende aussi et au moins partiellement dans les côtés du véhicule.

15. Véhicule selon la revendication 11, le véhicule étant un véhicule à moteur.
